(19) Europäisches Patentamt / European Patent Office / Office européen des brevets

(11) **EP 4 654 283 A1**

(12) **EUROPEAN PATENT APPLICATION**

(43) Date of publication:
**26.11.2025 Bulletin 2025/48**

(21) Application number: **25177775.1**

(22) Date of filing: **20.05.2025**

(51) International Patent Classification (IPC):
*H01M 4/134* (2010.01)  *H01M 4/38* (2006.01)
*H01M 4/62* (2006.01)  *H01M 10/0525* (2010.01)
*H01M 10/0567* (2010.01)  *H01M 4/02* (2006.01)
*H01M 4/36* (2006.01)  *H01M 4/48* (2010.01)
*H01M 4/587* (2010.01)

(52) Cooperative Patent Classification (CPC):
**H01M 4/134; H01M 4/386; H01M 4/622;**
**H01M 10/0525; H01M 10/0567;** H01M 4/364;
H01M 4/483; H01M 4/587; H01M 2004/027;
H01M 2300/0025; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **21.05.2024 CN 202410630548**

(71) Applicant: **Ningde Amperex Technology Ltd.**
**Ningde City, Fujian Province 352100 (CN)**

(72) Inventors:
• **WANG, Kefei**
**Ningde City, Fujian Province, China, 352100 (CN)**
• **ZHUANG, Ruirui**
**Ningde City, Fujian Province, China, 352100 (CN)**

(74) Representative: **Icosa**
**83 avenue Denfert-Rochereau**
**75014 Paris (FR)**

(54) **LITHIUM-ION BATTERY AND ELECTRONIC APPARATUS**

(57) A lithium-ion battery includes a positive electrode, a negative electrode, and an electrolyte. The negative electrode includes a negative electrode current collector and a negative electrode active material layer formed on the negative electrode current collector, the negative electrode active material layer includes a silicon material and polyisocyanate, and the electrolyte includes trifluoroalkyl acetate; based on a weight of a negative electrode active material, a weight percentage of polyisocyanate is a%; and based on a weight of the electrolyte, a weight percentage of trifluoroalkyl acetate is b%, and $0.1 \leq a/b \leq 5$. This design can effectively improve the adhesiveness of the negative electrode and the low-temperature output characteristics of the lithium-ion battery.

EP 4 654 283 A1

**Description**

## TECHNICAL FIELD

This application relates to the field of energy storage, and specifically, to a lithium-ion battery and an electronic apparatus.

## BACKGROUND

With the rapid development of new energy vehicles, existing commercialized positive and negative electrode materials are obviously unable to satisfy the energy density requirements of lithium-ion batteries, especially as the actual specific capacity of graphite negative electrode materials has approached the theoretical specific capacity. Silicon negative electrode materials have become the most promising next-generation lithium-ion battery negative electrode materials due to their higher theoretical specific capacity.

However, the significant volume change of silicon during lithium intercalation and deintercalation severely affects the service life of batteries. The existing commercialized mixture system of sodium carboxymethyl cellulose and styrene-butadiene emulsion obviously cannot provide a good adhesive effect when the volume of the silicon negative electrode changes.

Based on the foregoing research, how to provide a binder or a binder additive that can provide a good adhesive effect when the volume of the silicon negative electrode changes, and improve the low-temperature output performance of a silicon negative electrode system lithium-ion battery, has become an urgent problem to be solved.

## SUMMARY

Some embodiments of this application solve the problems in the prior art to some extent by adjusting the composition of a negative electrode used in a lithium-ion battery and the components in an electrolyte.

According to one aspect of this application, this application provides a lithium-ion battery including a positive electrode, a negative electrode, and an electrolyte, where the negative electrode includes a negative electrode current collector and a negative electrode active material layer, and the negative electrode active material layer includes a silicon material and polyisocyanate; the electrolyte includes trifluoroalkyl acetate; based on a weight of a negative electrode active material, a weight percentage of polyisocyanate is $a\%$; and based on a weight of the electrolyte, a weight percentage of trifluoroalkyl acetate is $b\%$, and $0.1 \leq a/b \leq 5$. This design can fully improve the adhesiveness of the negative electrode and the low-temperature output characteristics of the battery.

According to some embodiments of this application, polyisocyanate includes at least one of aromatic polyisocyanate, aliphatic polyisocyanate, or aromatic-aliphatic polyisocyanate.

According to some embodiments of this application, aliphatic polyisocyanate includes cycloaliphatic polyisocyanate.

According to some embodiments of this application, trifluoroalkyl acetate includes at least one of methyl trifluoroacetate, ethyl trifluoroacetate, propyl trifluoroacetate, butyl trifluoroacetate, pentyl trifluoroacetate, hexyl trifluoroacetate, or isopropyl trifluoroacetate.

According to some embodiments of this application, based on the weight of the negative electrode active material, the weight percentage of polyisocyanate is $a\%$; and based on the weight of the electrolyte, the weight percentage of trifluoroalkyl acetate is $b\%$, and $0.5 \leq a/b \leq 4$. Preferably, where $1 \leq a/b \leq 3$, this can further improve the low-temperature output characteristics of the lithium-ion battery.

According to some embodiments of this application, a value of a ranges from 0.01 to 2, and/or a value of b ranges from 0.01 to 3.

According to some embodiments of this application, the value of a ranges from 0.1 to 1.8, and/or the value of b ranges from 0.1 to 2.

According to some embodiments of this application, the electrolyte further includes a sulfur-oxygen double bond compound, and the sulfur-oxygen double bond compound includes at least one of 1,3-propane sultone, ethylene sulfate, propylene sulfate, or 1,3-propene sultone.

According to some embodiments of this application, based on the weight of the electrolyte, a weight percentage of the sulfur-oxygen double bond compound ranges from 0.05% to 4%, preferably ranges from 0.08% to 0.8%. This can further improve the low-temperature output characteristics of the lithium-ion battery.

According to another aspect of this application, this application provides an electronic apparatus including the lithium-ion battery according to this application.

In this application, a specific combination of a negative electrode structure and an electrolyte is used. This design can fully improve the adhesiveness of the negative electrode and the low-temperature output characteristics of the lithium-ion battery.

Additional aspects and advantages of some embodiments of this application are partly described and presented in subsequent descriptions, or explained by implementation of some embodiments of this application.

**DETAILED DESCRIPTION**

Some embodiments of this application are described in detail below. Some embodiments of this application should not be construed as limitations on this application.

Unless otherwise expressly indicated, the following terms used in this application have the meanings described below.

In this application, a specific combination of a negative electrode structure and an electrolyte is used. This design can fully improve the adhesiveness of the negative electrode and the low-temperature output characteristics of a lithium-ion battery.

In one embodiment, this application provides a lithium-ion battery including a positive electrode, negative electrode, and electrolyte as described below.

Negative electrode

A negative electrode includes a negative electrode current collector and a negative electrode active material layer disposed on a surface of the negative electrode current collector, where the negative electrode active material layer includes a negative electrode active material. In some embodiments, a rechargeable capacity of the negative electrode active material is greater than a discharge capacity of a positive electrode active material to prevent lithium metal from unexpectedly precipitating at the negative electrode during charging.

This application provides a lithium-ion battery including: a positive electrode, a negative electrode, and an electrolyte, where the negative electrode includes a negative electrode current collector and a negative electrode active material layer disposed on a surface of the negative electrode current collector, and the negative electrode active material layer includes a silicon material and polyisocyanate; and the electrolyte includes trifluoroalkyl acetate. This design can effectively improve the adhesiveness of the negative electrode and the low-temperature output characteristics of the lithium-ion battery.

The inventors of this application, after in-depth research, have found that when the negative electrode active material layer includes the silicon material and polyisocyanate, and the electrolyte includes trifluoroalkyl acetate, polyisocyanate and trifluoroalkyl acetate are firmly bonded to each other on a surface of the silicon material. The electrochemical durability of a formed coating film is improved, and the adhesiveness of the negative electrode and the low-temperature output characteristics of the lithium-ion battery are significantly improved.

In some embodiments, based on a weight of a negative electrode active material, a weight percentage of polyisocyanate is a%, where $0.01 \leq a \leq 2$. In some embodiments, $0.1 \leq a \leq 1.8$. In some embodiments, $0.1 \leq a \leq 1.6$. In some embodiments, $0.5 \leq a \leq 1$. In some embodiments, a is 0.05, 0.1, 0.2, 0.3, 0.4, 0.5, 1, 1.5, or 2, or falls within a range defined by any two of these values. The weight percentage of polyisocyanate in the negative electrode active material layer falling within the foregoing range is conducive to further improving the adhesiveness of the negative electrode and the low-temperature output characteristics of the lithium-ion battery.

In some embodiments, polyisocyanate includes at least one of aromatic polyisocyanate, aliphatic polyisocyanate, or aromatic-aliphatic polyisocyanate. In some embodiments, aliphatic polyisocyanate includes cycloaliphatic polyisocyanate. In some embodiments, polyisocyanate is preferably aromatic polyisocyanate, which can further improve the adhesiveness of the negative electrode.

In some embodiments, examples of aromatic polyisocyanate may include: 1,3-phenylene diisocyanate, 4,4'-diphenyl diisocyanate, 1,4-phenylene diisocyanate, 4,4'-diphenylmethane diisocyanate, 2,4-toluene diisocyanate, 2,6-toluene diisocyanate, 4,4'-methylenedianiline diisocyanate, 2,4,6-triisocyanate toluene, 1,3,5-triisocyanate benzene, dimethoxyaniline diisocyanate, 4,4'-diphenyl ether diisocyanate, 4,4',4"-triphenylmethane triisocyanate, and the like.

In some embodiments, examples of aliphatic polyisocyanate may include: trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, 2,4,4-trimethylhexamethylene diisocyanate, and the like.

In some embodiments, examples of aromatic-aliphatic polyisocyanate may include: ω,ω'-diisocyanate-1,3-dimethylbenzene, ω,ω'-diisocyanate-1,4-dimethylbenzene, ω,ω'-diisocyanate-1,4-diethylbenzene, 1,4-tetramethylxylylene diisocyanate, 1,3-tetramethylxylylene diisocyanate, and the like.

In some embodiments, examples of cycloaliphatic polyisocyanate may include: 3-isocyanatomethyl-3,5,5-trimethylcyclohexyl isocyanate, 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), 1,4-bis(isocyanatomethyl)cyclohexane, and the like.

In some embodiments, polyisocyanate is diisocyanate, and triisocyanate obtained by modifying diisocyanate can also be used. Examples of triisocyanate may include a trimethylolpropane adduct of diisocyanate, biuret (biuret), a trimer (trimer containing an isocyanurate ring), and the like.

In some embodiments, polyisocyanate is preferably 4,4'-diphenylmethane diisocyanate, hexamethylene diisocyanate, 3-isocyanatomethyl-3,5,5-trimethylcyclohexyl isocyanate(isophorone diisocyanate), and the like.

The negative electrode active material includes a silicon material, and the silicon material includes at least one of (a composite of a silicon substance and a carbon substance) or a silicon oxide ($SiO_x$, where $0<x\leq2$). The silicon substance may be silicon particles, silicon alloy particles, or the like. The negative electrode active material further includes a carbon material, and the carbon material may be crystalline carbon, amorphous carbon, or a mixture thereof. The crystalline carbon may be graphite, such as amorphous, plate-shaped, flake-shaped, spherical or fiber-shaped natural graphite and/or artificial graphite, and the amorphous carbon may be soft carbon (low-temperature calcined carbon), hard carbon, mesophase asphalt carbide, calcined coke, or the like.

The composite of the silicon substance and the carbon substance may be a composite with a structure where silicon nanoparticles are arranged on the carbon substance, where the silicon particles include composites on a surface and inside the carbon substance, and composites where silicon particles are coated with the carbon substance and included within the carbon substance. In the composite of the silicon substance and the carbon substance, the carbon substance may be graphite, graphene, graphene oxide, or a combination thereof.

The composite of the silicon substance and the carbon substance may be an active material obtained by dispersing the silicon nanoparticles having an average particle size of 200 nm or smaller on carbon substance particles, and then applying carbon and active materials where silicon (Si) particles are present on and inside graphite. An average particle size of secondary particles of the composite of the silicon substance and the carbon substance may range from 5 $\mu$m to 20 $\mu$m. The average particle size of the silicon nanoparticles may be 5 nm or more, for example, 10 nm or more, for example, 20 nm or more, for example, 50 nm or more, or for example, 70 nm or more. The average particle size of the silicon nanoparticles may be 200 nm or less, 150 nm or less, 100 nm or less, 50 nm or less, 20 nm or less, or 10 nm or less. For example, the average particle size of the silicon nanoparticles may range from 100 nm to 150 nm.

The average particle size of the secondary particles of the composite of the silicon substance and the carbon substance may range from 5 $\mu$m to 20 $\mu$m, for example, from 7 $\mu$m to 15 $\mu$m, or for example, from 10 $\mu$m to 13 $\mu$m.

Any well-known current collector may be used as a current collector for holding the negative electrode active material. Examples of the negative electrode current collector include but are not limited to metal materials such as copper, nickel, stainless steel, and nickel-plated steel. In some embodiments, the negative electrode current collector is made of copper.

The negative electrode active material layer may further include other negative electrode binders. The negative electrode binder can improve adhesion between negative electrode active material particles and adhesion between the negative electrode active material and the current collector. The negative electrode binder is not limited to any particular type, provided that its material is stable to the electrolyte or a solvent used for manufacturing of an electrode. In some embodiments, the negative electrode binder includes a resin binder. Examples of the resin binder include but are not limited to fluororesin, polyacrylonitrile (PAN), polyimide resin, acrylic resin, and polyolefin resin. When a negative electrode mixture slurry is prepared using an aqueous solvent, the negative electrode binder includes but is not limited to hydroxyethyl carboxymethyl cellulose (HECMC) or its salts, carboxymethyl cellulose (CMC) or its salts, styrene-butadiene rubber (SBR), polyacrylic acid (PAA) or its salts, and polyvinyl alcohol.

The negative electrode may be prepared in the following method: The negative electrode mixture slurry containing the negative electrode active material, the resin binder, and the like is applied onto the negative electrode current collector. After drying, rolling is performed to form the negative electrode active material layer on two surfaces of the negative electrode current collector, to obtain the negative electrode.

Electrolyte

The electrolyte used in the lithium-ion battery of this application includes an electrolytic salt and a solvent for dissolving the electrolytic salt. In some embodiments, the electrolyte of this application includes trifluoroalkyl acetate, and trifluoroalkyl acetate can inhibit the decomposition and regeneration of the coating film during charge and discharge cycles. In some embodiments, trifluoroalkyl acetate includes at least one of methyl trifluoroacetate, ethyl trifluoroacetate, propyl trifluoroacetate, butyl trifluoroacetate, pentyl trifluoroacetate, hexyl trifluoroacetate, or isopropyl trifluoroacetate.

In some embodiments, based on a weight of the electrolyte, a weight percentage of trifluoroalkyl acetate is b%, where $0.01\leq b\leq3$. In some embodiments, $0.02\leq b\leq2.5$. In some embodiments, $0.03\leq b\leq2$. In some embodiments, $0.1\leq b\leq2$. In some embodiments, $0.5\leq b\leq1$. In some embodiments, b is 0.05, 0.1, 0.15, 0.2, 0.25, 0.3, 0.35, 0.4, 0.45, 0.5, 0.6, 0.7, 0.8, 0.9, 1, 1.5, 2, 2.5, or 3, or falls within a range defined by any two of the foregoing values. The weight percentage of trifluoroalkyl acetate in the electrolyte falling within the foregoing range is conducive to further improving the low-temperature output characteristics of the lithium-ion battery, and further improving the adhesiveness of the negative electrode after trifluoroalkyl acetate is combined with polyisocyanate in the negative electrode.

In some embodiments, based on a weight of the negative electrode active material, a weight percentage of polyisocyanate is a%; and based on the weight of the electrolyte, a weight percentage of trifluoroalkyl acetate is b%, and a and b satisfy: $0.1 \leq a/b \leq 5$. In some embodiments, $0.5 \leq a/b \leq 4$. In some embodiments, $1 \leq a/b \leq 3$. In some embodiments, a/b is 0.1, 0.3, 0.5, 0.7, 1, 1.2, 1.5, 1.9, 2, 2.1, 2.5, 2.8, 3, 3.3, 3.5, 4, 4.2, 4.6, 4.7, or 5, or falls within a range defined by any two of the foregoing values. When a weight ratio of polyisocyanate and trifluoroalkyl acetate satisfies the forgoing ratio, the coating film formed by the two exhibits higher electrochemical durability, further improving the adhesiveness of the negative electrode and the low-temperature output characteristics of the lithium-ion battery.

In some embodiments, the electrolyte may further include a sulfur-oxygen double bond compound, and the sulfur-oxygen double bond compound can further inhibit the decomposition of the coating film during cycling of the battery. The sulfur-oxygen double bond compound includes at least one of 1,3-propane sultone, ethylene sulfate, propylene sulfate, or 1,3-propene sultone.

In some embodiments, based on the weight of the electrolyte, a weight percentage of the sulfur-oxygen double bond compound is c%, where $0.05 \leq c \leq 4$. In some embodiments, $0.1 \leq c \leq 4$. In some embodiments, $0.3 \leq c \leq 3$. In some embodiments, $0.08 \leq c \leq 0.8$. In some embodiments, c is 0.05, 0.1, 0.2, 0.3, 0.4, 0.5, 1, 1.5, 2, 2.5, 3, or 4, or falls within a range defined by any two of these values. The weight percentage of the sulfur-oxygen double bond compound falling within the foregoing range is conducive to further improving the low-temperature output characteristics of the lithium-ion battery.

In some embodiments, the electrolyte further contains any non-aqueous solvent that is known in the art and may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, or a sulfur-containing organic solvent.

In some embodiments, the solvent used in the electrolyte of this application includes cyclic carbonate, linear carbonate, cyclic carboxylate, linear carboxylate, and a combination thereof. In some embodiments, the solvent used in the electrolyte of this application includes an organic solvent selected from a group consisting of the following materials: ethylene carbonate, propylene carbonate, diethyl carbonate, ethyl propionate, propyl propionate, propyl acetate, ethyl acetate, and a combination thereof. In some embodiments, the solvent used in the electrolyte in this application includes ethylene carbonate, propylene carbonate, diethyl carbonate, ethyl propionate, propyl propionate, $\gamma$-butyrolactone, and a combination thereof.

In some embodiments, the electrolytic salt is not particularly limited, and may be any well-known material that can be used as an electrolytic salt. A weight of the electrolytic salt is not particularly limited, provided that the effects of this application are not impaired.

Positive electrode

A positive electrode includes a positive electrode current collector and a positive electrode active material layer disposed on a surface of the positive electrode current collector.

The positive electrode active material layer contains a positive electrode active material, and one or more positive electrode active material layers may be provided. Each layer of a plurality of positive electrode active materials may contain the same or different positive electrode active materials. The positive electrode active material is any material capable of reversibly intercalating and deintercalating lithium ions.

The positive electrode active material includes a lithium transition metal oxide containing nickel and other transition metals. In the lithium transition metal oxide containing nickel and other transition metals, based on a total number of moles of the transition metals, an amount of nickel may be 60 mol% or more, for example, 75 mol% or more, for example, 80 mol% or more, for example, 85 mol% or more, or for example, 90 mol% or more.

For example, the lithium transition metal oxide may be a compound represented by the following formula 1:

formula 1: $\quad Li_aNi_xCo_yM_zO_{2-b}A_b$,

where in formula 1, $0.9 \leq a \leq 1.2$, $0 \leq b \leq 0.2$, $0.6 \leq x < 1$, $0 < y \leq 0.3$, $0 < z \leq 0.3$, and $x+y+z=1$, M is selected from at least one of manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or boron (B); and A is F, S, Cl, Br, or a combination thereof. For example, the foregoing subscripts may be as follows: $0.7 \leq x < 1$, $0 < y \leq 0.3$, and $0 < z \leq 0.3$; $0.8 \leq x < 1$, $0 < y \leq 0.3$, and $0 < z \leq 0.3$; $0.8 \leq x < 1$, $0 < y \leq 0.2$, and $0 < z \leq 0.2$; $0.83 \leq x < 0.97$, $0 < y \leq 0.15$, and $0 < z \leq 0.15$; or $0.85 \leq x < 0.95$, $0 < y \leq 0.1$, and $0 < z \leq 0.1$.

For example, the lithium transition metal oxide may be at least one compound represented by the following formula 2 or formula 3:

formula 2:  $LiNi_xCo_yMn_zO_2$,

where in formula 2, $0.6 \leq x \leq 0.95$, $0 < y \leq 0.2$, and $0 < z \leq 0.1$, for example, $0.7 \leq x \leq 0.95$, $0 < y \leq 0.3$, and $0 < z \leq 0.3$; and

formula 3:  $LiNi_xCo_yAl_zO_2$,

where in formula 3, $0.6 \leq x \leq 0.95$, $0 < y \leq 0.2$, and $0 < z \leq 0.1$; for example, $0.7 \leq x \leq 0.95$, $0 < y \leq 0.3$, and $0 < z \leq 0.3$; for example, $0.8 \leq x \leq 0.95$, $0 < y \leq 0.3$, and $0 < z \leq 0.3$; for example, $0.82 \leq x \leq 0.95$, $0 < y \leq 0.15$, and $0 < z \leq 0.15$; or for example, $0.85 \leq x \leq 0.95$, $0 < y \leq 0.1$, and $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, or $LiNi_{0.88}Co_{0.1}Al_{0.02}O_2$.

According to another embodiment, the positive electrode active material includes at least one active material selected from the group consisting of Li-Ni-CoAl(NCA), Li-Ni-Co-Mn(NCM), lithium cobalt oxide ($LiCoO_2$), lithium manganese oxide ($LiMnO_2$), lithium nickel oxide ($LiNiO_2$), and lithium iron phosphate ($LiFePO_4$).

In some embodiments, a positive electrode conductive material is not limited in type, and any known conductive material may be used. Examples of the positive electrode conductive material may include but are not limited to: carbon blacks such as acetylene black and Super-P; amorphous carbon materials such as needle coke; carbon nanotubes; and graphene. The foregoing positive electrode conductive material may be used alone or in any combination.

A positive electrode binder used for preparation of the positive electrode active material layer is not particularly limited in type, provided that its material can be dissolved or dispersed in a liquid medium used for preparation of an electrode in a case of a coating application method. Examples of the positive electrode binder include but are not limited to one or more of the following: a resin-based polymer such as polyethylene, polypropylene, polyethylene glycol terephthalate, polymethyl methacrylate, polyimide, aromatic polyamide, cellulose, or nitrocellulose; a rubber polymer such as styrene-butadiene rubber (SBR), nitrile butadiene rubber (NBR), fluorine rubber, isoprene rubber, butadiene rubber, or ethylene-propylene rubber; a thermoplastic elastomeric polymer such as styrene-butadiene-styrene block copolymer or hydride thereof, ethylene-propylene-diene terpolymer (EPDM), styrene-ethylene-butadiene-ethylene copolymer, or styrene-isoprene-styrene block copolymer or hydride thereof; a soft resinous polymer such as syndiotactic-1,2-polybutadiene, polyvinyl acetate, ethylene-vinyl acetate copolymer, or propylene-$\alpha$-olefin copolymer; a fluorine polymer such as poly(vinylidene difluoride) (PVDF), polytetrafluoroethylene, fluorinated poly(vinylidene difluoride), or polytetrafluoroethylene-ethylene copolymer; and a polymer composition having ion conductivity of alkali metal ions (particularly lithium ions). The foregoing positive electrode binder may be used alone or in any combination.

A solvent used for forming a positive electrode slurry is not limited in type, provided that the solvent is capable of dissolving or dispersing the positive electrode active material, the conductive material, the positive electrode binder, and a thickener used as appropriate to needs. Examples of the solvent used for forming the positive electrode slurry may include any one of an aqueous solvent or an organic solvent. Examples of an aqueous medium may include but are not limited to a mixed medium of alcohols and water, and water. Examples of an organic medium may include but are not limited to aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide and dimethyl sulfoxide.

The thickener is typically used to adjust the viscosity of the slurry. Under the condition that the aqueous medium is used, the thickener and a styrene-butadiene rubber (SBR) emulsion can be used for slurrying. The thickener is not particularly limited in type. Examples of the thickener may include but are not limited to carboxymethyl cellulose, methyl cellulose, hydroxymethyl cellulose, ethyl cellulose, polyvinyl alcohol, oxidized starch, phosphorylated starch, casein, and salts thereof. The foregoing thickener may be used alone or in any combination.

The positive electrode current collector is not particularly limited in type and may be any known material suitable for serving as a positive electrode current collector. Examples of the positive electrode current collector may include but are not limited to: metal materials such as aluminum, stainless steel, nickel coating, titanium, and tantalum; and materials such as carbon cloth and carbon paper. In some embodiments, the positive electrode current collector is made of a metal material. In some embodiments, the positive electrode current collector is made of aluminum.

To reduce electronic contact resistance of the positive electrode current collector and the positive electrode active material layer, a conductive additive or a conductive coating may be included in a surface of the positive electrode current collector. Examples of the conductive additive may include but are not limited to carbon and precious metals such as gold, platinum, and silver. Examples of the conductive coating may include but are not limited to a mixture layer containing an inorganic oxide, a conductive agent, and a binder.

The positive electrode may be prepared by forming the positive electrode active material layer containing the positive electrode active material and the binder on the current collector. The positive electrode using the positive electrode active material can be prepared in a conventional method as follows: The positive electrode active material, the binder, and the conductive material and the thickener used as appropriate to needs are subjected to dry mixing to prepare a sheet, and then the obtained sheet is pressed onto the positive electrode current collector; or these materials are dissolved or dispersed in the liquid medium to prepare the slurry, and then the obtained slurry is applied onto the positive electrode current collector and drying is performed to form the positive electrode active material layer on the current collector. In this way, the positive electrode can be obtained.

Separator

To prevent short circuit, a separator is typically provided between the positive electrode and the negative electrode. In this case, the electrolyte of this application typically infiltrates into the separator for use.

The separator is not particularly limited in material and shape, provided that the separator does not significantly impair the effects of this application. The separator may be a resin, glass fiber, an inorganic material, or the like that is formed of a material stable to the electrolyte of this application. In some embodiments, the separator includes a porous sheet or non-woven fabric-like material having an excellent fluid retention property, or the like. Examples of the material of the resin or glass fiber separator may include but are not limited to polyolefin, aromatic polyamide, polytetrafluoroethylene, and polyethersulfone. In some embodiments, polyolefin is polyethylene or polypropylene. In some embodiments, polyolefin is polypropylene. The material of the foregoing separator may be used alone or in any combination.

The separator may alternatively be a material formed by laminating the foregoing materials, and examples thereof include but are not limited to a three-layer separator formed by laminating polypropylene, polyethylene, and polypropylene in order.

Examples of the material of the inorganic material may include but are not limited to oxides such as aluminum oxide and silicon dioxide, nitrides such as aluminum nitride and silicon nitride, and sulfates (for example, barium sulfate and calcium sulfate). The form of the inorganic material may include but is not limited to a granular or fibrous form.

The form of the separator may be a film form, and examples thereof include but are not limited to a non-woven fabric, a woven fabric, and a microporous film. In the film form, the separator has a pore diameter of $0.01\ \mu m$ to $1\ \mu m$ and a thickness of $5\ \mu m$ to $50\ \mu m$. In addition to the standalone film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with aluminum oxide particles of which 90% have a particle size less than $1\ \mu m$.

The thickness of the separator is random. In some embodiments, a thickness of the separator is greater than $1\ \mu m$, greater than $5\ \mu m$, or greater than $8\ \mu m$. In some embodiments, the thickness of the separator is less than $50\ \mu m$, less than $40\ \mu m$, or less than $30\ \mu m$. When the thickness of the separator falls within the foregoing ranges, insulation performance and mechanical strength can be guaranteed, and the rate performance and energy density of the lithium-ion battery can be guaranteed.

This application further provides an electronic apparatus including the lithium-ion battery according to this application.

The lithium-ion battery of this application is not particularly limited to any purpose, and may be used in any electronic apparatus known in the prior art. In some embodiments, the lithium-ion battery of this application may be used without limitation in a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

The preparation of the lithium-ion battery is described below in conjunction with specific embodiments. Persons skilled in the art understand that the preparation method described in this application is only an example, and that all other suitable preparation methods fall within the scope of this application.

I. Preparation of lithium-ion battery

1. Preparation of negative electrode

Artificial graphite and $SiO_2$ (at a mass ratio of 90:10), styrene-butadiene rubber, sodium hydroxyethyl carboxymethyl cellulose were mixed in a mass ratio of 96.5:1.5:2 with deionized water, polyisocyanate was then added, and the resulting mixture was evenly stirred to obtain a slurry. The slurry was applied onto a copper foil of $9\ \mu m$. After processes of

drying, cold pressing, cutting, and tab welding, a negative electrode was obtained.

2. Preparation of positive electrode

$LiNi_{0.6}Co_{0.2}Mn_{0.2}O_2$, Super-P, and poly(vinylidene difluoride) were mixed with N-methylpyrrolidone (NMP) in a mass ratio of 96:2:2, and the resulting mixture was evenly stirred to obtain a positive electrode slurry. The positive electrode slurry was applied onto an aluminum foil of 12 μm. After steps of drying, cold pressing, cutting, and tab welding, a positive electrode was obtained.

3. Preparation of electrolyte

In a dry argon environment, ethylene carbonate (EC), propylene carbonate (PC), diethyl carbonate (DEC), and propyl propionate (PP) (at a weight ratio of 1:1:1:3) were mixed, $LiPF_6$ was added at a concentration of 12.5% to obtain a base electrolyte. 4% fluoroethylene carbonate, trifluoroalkyl acetate, and other additives were added to the base electrolyte to obtain an electrolyte used in different examples and comparative examples.

4. Preparation of separator

A 7-micron polyethylene porous polymer film was used as a separator.

5. Preparation of lithium-ion battery

The obtained positive electrode, separator, negative electrode were wound in order and placed in an outer packaging foil, leaving an injection opening. The electrolyte was injected from the injection opening which was then sealed, followed by processes such as formation and capacity, to obtain a lithium-ion battery.

II. Test method

1. Adhesiveness of negative electrode

An approximately 5 cm×5 cm square was cut out from the negative electrode, and a mass ($X_0$) of the cut negative electrode plate was measured. Next, the measured negative electrode plate was placed into a 500 ml glass bottle, and oscillated at 100 rpm for 30 minutes using a shaker. Then, a mass ($X_1$) of the oscillated negative electrode plate was measured. Then, the powder detachment performance (mass%) was calculated according to the following formula:

$$\text{powder detachment performance} = (X_0 - X_1)/X_0 \times 100$$

The smaller a value of powder detachment performance (the higher the resistance to powder detachment performance), the less likely an electrode active material would fall off from the negative electrode, and the better the adhesiveness is.

2. Low-temperature output characteristics

Under the condition of -10°C, the battery prepared in each of the examples and each of the comparative examples was charged at a constant current of 0.2C until a battery voltage became 4.2 V, and then the battery was charged at a constant voltage of 4.2 V until a charging current became 0.02C. Next, the battery was discharged at a constant current of 0.2C until the battery voltage became 3.0 V, and an initial capacity of the lithium-ion battery was measured. Thereafter, the lithium-ion battery with the measured initial capacity at a constant current of 0.2C was charged until the battery voltage became 4.2 V, then the battery at a constant voltage of 4.2 V was charged until the charging current became 0.02C. Next, the battery at a constant current of 3C was discharged until the battery voltage became 3.0 V, and a 3C capacity was measured. Then, the low-temperature output characteristics was calculated as: (=[(3C capacity)/(initial capacity)]×100%).

III. Test result

Table 1 showed the effects of polyisocyanate and trifluoroalkyl acetate on the adhesiveness of the negative electrode and the low-temperature output characteristics of the battery. Polyisocyanates including 4,4'-diphenylmethane diisocyanate (a1), hexamethylene diisocyanate (a2), and 3-isocyanatomethyl-3,5,5-trimethylcyclohexyl isocyanate (a3) were used. Trifluoroalkyl acetates including ethyl trifluoroacetate (b1), propyl trifluoroacetate (b2), and hexyl trifluoroacetate (b3) were used. Sulfur-oxygen double bond compounds including 1,3-propane sultone (c1), ethylene sulfate (c2), propylene sulfate (c3), 1,3-propene sultone (c4) were used.

## Table 1

| | Polyisocyanate and percentage a | Trifluoroalkyl acetate and percentage b | Sulfur-oxygen double bond compound and percentage c | a/b | Adhesiveness of negative electrode | Low-temperature output |
|---|---|---|---|---|---|---|
| Example 1 | a1 (0.1) | b1 (0.1) | None | 1 | 2.8 | 87.4 |
| Example 2 | a1 (0.15) | b2 (0.1) | None | 1.5 | 2.7 | 87.5 |
| Example 3 | a1 (0.4) | b3 (0.2) | None | 2 | 2.6 | 87.8 |
| Example 4 | a1 (0.5) | b2 (0.2) | None | 2.5 | 2.5 | 88.3 |
| Example 5 | a2 (1.8) | b2 (0.6) | None | 3 | 2.7 | 88.5 |
| Example 6 | a3 (2) | b2 (0.5) | None | 4 | 3.2 | 86.9 |
| Example 7 | a3 (1) | b3 (2) | None | 0.5 | 3.7 | 84.2 |
| Example 8 | a3 (0.01) | b3 (0.1) | None | 0.1 | 4.8 | 80.2 |
| Example 9 | a3 (0.05) | b3 (0.01) | None | 5 | 5.3 | 78.1 |
| Example 10 | a3 (2) | b3 (3) | None | 0.7 | 4.5 | 81.1 |
| Example 11 | a1 (0.1) | b3 (0.1) | c1 (0.05) | 1 | 2.1 | 90.5 |
| Example 12 | a1 (0.1) | b3 (0.1) | c1 (0.08) | 1 | 1.9 | 90.8 |
| Example 13 | a1 (0.1) | b3 (0.1) | c1 (0.1) | 1 | 1.8 | 90.6 |
| Example 14 | a1 (0.1) | b3 (0.1) | c1 (0.5) | 1 | 1.5 | 91.1 |
| Example 15 | a1 (0.1) | b3 (0.1) | c1 (0.8) | 1 | 1.9 | 90.5 |
| Example 16 | a1 (0.1) | b3 (0.1) | c2 (1.3) | 1 | 2.2 | 90.1 |
| Example 17 | a1 (0.1) | b3 (0.1) | c3 (2.6) | 1 | 2.6 | 89.9 |
| Example 18 | a1 (0.1) | b3 (0.1) | c4 (4) | 1 | 2.7 | 87.6 |
| Comparative example 1 | None | b1 (0.1) | None | None | 8.9 | 58.9 |
| Comparative example 2 | a1 (0.1) | None | None | None | 9.3 | 55.1 |

The values in parentheses in the foregoing table are all mass percentages.

When the negative electrode active material layer includes polyisocyanate and the electrolyte includes trifluoroalkyl acetate, due to the large number of oxygen-containing and nitrogen-containing functional groups in polyisocyanate and trifluoroalkyl acetate, they are firmly bond to each other, forming a coating film on an electrode surface with good electrochemical durability, thereby significantly improving the adhesiveness of the negative electrode and the low-temperature output characteristics of the lithium-ion battery. Especially when $1 \leq a/b \leq 3$ is satisfied, both the adhesiveness of the negative electrode and the low-temperature output characteristics of the lithium-ion battery are further improved.

When the electrolyte further includes the sulfur-oxygen double bond compound, the decomposition of the coating film during cycling of the battery can be inhibited, and the low-temperature output characteristics of the battery and the adhesiveness of the negative electrode can be further improved. Especially when the weight percentage of the sulfur-oxygen double bond compound ranges from 0.08% to 0.8%, the adhesiveness of the negative electrode can be further improved.

Although illustrative embodiments have been demonstrated and described, persons skilled in the art should understand that the foregoing embodiments are not to be construed as any limitation on this application, and that some embodiments may be changed, replaced, and modified without departing from the principle and scope of this application.

**Claims**

1.  A lithium-ion battery, comprising: a positive electrode, a negative electrode, and an electrolyte; **characterized in that** the negative electrode comprises a negative electrode current collector and a negative electrode active material layer, the negative electrode active material layer comprises a silicon material and polyisocyanate, and the electrolyte comprises trifluoroalkyl acetate; and

    based on a weight of a negative electrode active material, a weight percentage of polyisocyanate is a%; and based on a weight of the electrolyte, a weight percentage of trifluoroalkyl acetate is b%, and $0.1 \leq a/b \leq 5$.

2.  The lithium-ion battery according to claim 1, wherein polyisocyanate comprises at least one of aromatic polyisocyanate, aliphatic polyisocyanate, or aromatic-aliphatic polyisocyanate.

3.  The lithium-ion battery according to claim 1 or 2, wherein trifluoroalkyl acetate comprises at least one of methyl trifluoroacetate, ethyl trifluoroacetate, propyl trifluoroacetate, butyl trifluoroacetate, pentyl trifluoroacetate, hexyl trifluoroacetate, or isopropyl trifluoroacetate.

4.  The lithium-ion battery according to any one of claims 1 to 3, wherein $0.5 \leq a/b \leq 4$.

5.  The lithium-ion battery according to claim 4, wherein $1 \leq a/b \leq 3$.

6.  The lithium-ion battery according to claim 4, wherein a value of a ranges from 0.01 to 2, and/or a value of b ranges from 0.01 to 3.

7.  The lithium-ion battery according to claim 4, wherein a value of a ranges from 0.1 to 1.8, and/or a value of b ranges from 0.1 to 2.

8.  The lithium-ion battery according to any one of claims 1-7, wherein the electrolyte further comprises a sulfur-oxygen double bond compound; wherein the sulfur-oxygen double bond compound comprises at least one of 1,3-propane sultone, ethylene sulfate, propylene sulfate, or 1,3-propene sultone; and

    based on the weight of the electrolyte, a weight percentage of the sulfur-oxygen double bond compound ranges from 0.05% to 4%.

9.  The lithium-ion battery according to claim 8, wherein based on the weight of the electrolyte, the weight percentage of the sulfur-oxygen double bond compound ranges from 0.08% to 0.8%.

10. An electronic apparatus, comprising the lithium-ion battery according to any one of claims 1 to 9.

11. The electronic apparatus according to claim 10, wherein polyisocyanate comprises aromatic polyisocyanate.

12. The electronic apparatus according to claim 10 or 11, wherein the electrolyte further comprises 1,3-propane sultone.

13. The electronic apparatus according to any one of claims 10-12, wherein the electrolyte further comprises ethylene sulfate.

14. The electronic apparatus according to any one of claims 10-13, wherein the electrolyte further comprises propylene sulfate.

15. The electronic apparatus according to any one of claims 10-14, wherein the electrolyte further comprises 1,3-propene sultone.

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 546 104 A (JIANGSU CHINYO TECHNOLOGY CO., LTD.) 29 March 2019 (2019-03-29) * abstract * * examples 2-5 * * claims 1, 2, 6, 9 * | 1-15 | INV. H01M4/134 H01M4/38 H01M4/62 H01M10/0525 H01M10/0567 |
| A | US 2015/207141 A1 (SANYO ELECTRIC CO., LTD.) 23 July 2015 (2015-07-23) * paragraph [0010] – paragraph [0013] * * paragraph [0017] – paragraph [0020] * * examples 1-5; table 1 * * paragraph [0055] – paragraph [0056] * * claims 7-10, 13-16 * | 1-15 | ADD. H01M4/02 H01M4/36 H01M4/48 H01M4/587 |
| A | US 2024/063436 A1 (PANASONIC INTELLECTUAL PROPERTY MANAGEMENT CO., LTD.) 22 February 2024 (2024-02-22) * paragraph [0004] – paragraph [0009] * * paragraph [0012] – paragraph [0013] * * paragraph [0028] – paragraph [0044] * * paragraph [0050] – paragraph [0060] * * comparative examples 1-5; examples 1-7; table 1 * * claims 1, 4, 5 * | 1-15 | |
| A | EP 2 320 499 A1 (SANYO ELECTRIC CO., LTD.) 11 May 2011 (2011-05-11) * paragraph [0011] – paragraph [0016] * * paragraph [0019] – paragraph [0024] * * paragraph [0027] – paragraph [0030] * * examples 1-7; table 1 * * comparative examples 7-9; examples 8-12; table 2 * * comparative example 10; example 13; table 3 * * claims 1-7 * | 1-15 | |

TECHNICAL FIELDS
SEARCHED (IPC)

H01M

-/--

The present search report has been drawn up for all claims

| Place of search | Date of completion of the search | Examiner |
|---|---|---|
| Munich | 7 October 2025 | Masson, Jean-Pierre |

EPO FORM 1503 03.82 (P04C01)

Europäisches
Patentamt

European
Patent Office

Office européen
des brevets

# EUROPEAN SEARCH REPORT

**Application Number**

EP 25 17 7775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 525 585 A (HEFEI QIANRUI TECHNOLOGY CO., LTD.) 6 February 2024 (2024-02-06) * abstract * * example 3 * * claims 1-4, 6, 10 * ----- | 1-15 | |
| A | CN 115 441 058 A (XIANGHE KUNLUN NEW ENERGY MATERIAL CO., LTD.) 6 December 2022 (2022-12-06) * abstract * * examples 3, 4 * * claims 1, 3, 5, 6, 9, 10 * ----- | 1-15 | |

**TECHNICAL FIELDS SEARCHED (IPC)**

The present search report has been drawn up for all claims

| Place of search | Date of completion of the search | Examiner |
|---|---|---|
| Munich | 7 October 2025 | Masson, Jean-Pierre |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 7775

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | | Publication date | Patent family member(s) | | Publication date |
|---|---|---|---|---|---|
| CN 109546104 | A | 29-03-2019 | NONE | | |
| US 2015207141 | A1 | 23-07-2015 | CN | 104471755 A | 25-03-2015 |
| | | | JP | 6122014 B2 | 26-04-2017 |
| | | | JP | WO2014034078 A1 | 08-08-2016 |
| | | | US | 2015207141 A1 | 23-07-2015 |
| | | | WO | 2014034078 A1 | 06-03-2014 |
| US 2024063436 | A1 | 22-02-2024 | CN | 116941082 A | 24-10-2023 |
| | | | EP | 4300629 A1 | 03-01-2024 |
| | | | JP | WO2022181364 A1 | 01-09-2022 |
| | | | US | 2024063436 A1 | 22-02-2024 |
| | | | WO | 2022181364 A1 | 01-09-2022 |
| EP 2320499 | A1 | 11-05-2011 | CN | 102113161 A | 29-06-2011 |
| | | | EP | 2320499 A1 | 11-05-2011 |
| | | | JP | 5538226 B2 | 02-07-2014 |
| | | | JP | WO2010021236 A1 | 26-01-2012 |
| | | | KR | 20110053418 A | 23-05-2011 |
| | | | US | 2011151338 A1 | 23-06-2011 |
| | | | WO | 2010021236 A1 | 25-02-2010 |
| CN 117525585 | A | 06-02-2024 | NONE | | |
| CN 115441058 | A | 06-12-2022 | NONE | | |

EPO FORM P0459

For more details about this annex : see Official Journal of the European Patent Office, No. 12/82